# EUROPEAN PATENT SPECIFICATION

(11) **EP 4 581 111 B1**
(45) Date of publication and mention of the grant of the patent: **02.12.2026**
(21) Application number: 23764282.2
(22) Date of filing: 30.08.2023
(51) Int. Cl.: C11B 1/04, C11B 1/10, A23D 9/05, A23D 9/02

(54) **CO-EXTRACTION METHOD FOR PREPARING A STABLE OIL BODY SOLUTION FROM SEED MATERIAL AND CEREAL BRAN**
KOEXTRAKTIONSVERFAHREN ZUR HERSTELLUNG EINER STABILEN ÖLKÖRPERLÖSUNG AUS SAMENMATERIAL UND GETREIDEKLEIE
PROCÉDÉ DE CO-EXTRACTION POUR LA PRÉPARATION D'UNE SOLUTION STABLE DE CORPS HUILEUX À PARTIR D'UN MATÉRIAU DE GRAINE ET DE SON DE CÉRÉALE

(30) Priority: 31.08.2022 EP 22193079
(43) Date of publication of application: 09.07.2025
(73) Proprietor: Société des Produits Nestlé S.A., 1800 Vevey (CH)
(72) Inventor: ROHFRITSCH, Zhen, 1807 Blonay (CH); HUSSON, Jwanro, 1000 Lausanne 25 (CH)
(74) Representative: Wakasugi, Yuki
(86) International application number: PCT/EP2023/073750
(87) International publication number: WO 2024/047086

(56) References cited:
- US-A- 6 146 645
- DE CHIRICO SIMONE ET AL: "Enhancing the recovery of oilseed rape seed oil bodies (oleosomes) using bicarbonate-based soaking and grinding media", FOOD CHEMISTRY, ELSEVIER LTD, NL, vol. 241, 7 September 2017 (2017-09-07), pages 419 - 426, XP085196674, ISSN: 0308-8146, DOI: 10.1016/J.FOODCHEM.2017.09.008
- NIKIFORIDIS C V ET AL: "Oil bodies: An insight on their microstructure - maize germ vs sunflower", FOOD RESEARCH INTERNATIONAL, ELSEVIER, AMSTERDAM, NL, vol. 52, no. 1, 14 March 2013 (2013-03-14), pages 136 - 141, XP028530783, ISSN: 0963-9969, DOI: 10.1016/J.FOODRES.2013.02.052
- ABDULLAH ET AL: "Recent advances in the composition, extraction and food applications of plant-derived oleosomes", TRENDS IN FOOD SCIENCE & TECHNOLOGY, ELSEVIER SCIENCE PUBLISHERS, GB, vol. 106, 21 October 2020 (2020-10-21), pages 322 - 332, XP086399106, ISSN: 0924-2244, [retrieved on 20201021], DOI: 10.1016/J.TIFS.2020.10.029

## Description

### Introduction

Lipid oxidation is a strong limitation in food products generating off-tastes and off-flavors. Oil bodies, also known as oleosomes, are a natural form of lipid storage in plants mainly from seeds & nuts. They have a spherical structure, and a unique combination of proteins, lipids, and phospholipids. This unique structure is protecting lipids from oxidation, and it has a stable emulsion character.

Oil bodies can be used to protect polyunsaturated fatty acids (PUFAs) such as omega-3 fatty acids. Extracted plant oil bodies have relatively weak electrostatic repulsion between them which makes them physically unstable and limits their application in many foods.

Various types of components have been added to oil body preparations to improve their stabilities. Iwanaga et al, J. Agric. Food Chem. 56: 2240-2245 (2008) reported that pectin-coated oil bodies have similar or improved stability compared to uncoated oil bodies. WO 2017/066569 relates to an oil body composition containing oil bodies of different D50 size distribution from two different sources. The oil bodies are prepared separately and then combined to have the oil bodies preparation containing oil bodies of different size distribution. It is proposed to use preservatives to stabilize the oil body preparation.

S. De Chirico et al, Food Chemistry 241 (2018) 419-426 explores an improved aqueous method for extracting oil bodies (oleosomes) from rapeseed seeds, focusing on the use of sodium bicarbonate-based soaking and grinding media at alkaline pH (9.5). The study aims to optimize the recovery process to yield oil bodies with high integrity, purity, and storage stability, which are valuable for food applications.

US6146645A describes novel uses of oil bodies (oleosomes) naturally found in plant seeds. The patent covers methods for isolating these oil bodies and utilizing them as delivery vehicles for bioactive compounds, emulsifiers, or stabilizers in food, cosmetic, and pharmaceutical products. The technology leverages the natural structure and stability of oil bodies to improve product formulations, enhance shelf life, and enable controlled release of active ingredients.

This approach offers a more natural and potentially cost-effective alternative to synthetic emulsifiers and encapsulation systems.

C.V. Nikiforidis et al, Food research International 52 (2013) 136-141 compares the microstructure and stability of oil bodies (oleosomes) extracted from maize germ and sunflower seeds. Using advanced microscopy (cryo-SEM and CLSM), the authors found that oil bodies in maize germ are smaller and have irregular shapes due to lower moisture content, while those in sunflower seeds are more spherical because of higher water content. The extraction process yields natural oil-in-water emulsions, with extraneous proteins forming a protective second layer around the oil bodies, enhancing stability against coalescence. In maize germ, these proteins can be removed by aqueous washing, but in sunflower seeds, they are more strongly associated and difficult to remove without destabilizing the oil bodies.

Abdullah et al, Trends in Food Science & Technology 106 (2020) 322-332 discusses the structure, extraction methods, stability, and food applications of plant-derived oleosomes (oil bodies). Oleosomes are micron- or submicron-sized oil droplets surrounded by a protein-phospholipid membrane, mainly found in seeds and nuts, and are valued for their natural stability and ability to act as energy reservoirs. The article highlights various extraction techniques-including aqueous, twin-screw press, enzyme-assisted, and ultrasound-assisted methods-that yield intact oleosomes suitable for food use. Oleosomes' stability during storage and processing is influenced by factors such as pH, ionic strength, and temperature, and they show promise as natural emulsifiers, encapsulation systems for bioactives, and ingredients in imitation dairy products and edible films
In addition, the extraction of compounds from plants typically involves the use of organic solvent.

A clear need exists to develop a natural, clean label stabilizing system to maintain the integrity of oil bodies for food applications.

### Summary of the invention

The inventors of the present application have developed a natural stabilizing system which maintains the integrity of oil bodies for longer periods than prior art methods. It protects against PUFA oxidization for food applications, with minimal processing. It meets consumer demand for clean label ingredient lists and avoids the use of not only organic solvents but also additives such as lecithin and maltodextrin. The invention delivers both physical and chemical stability of oil bodies using specific combinations of seeds and cereal bran.

The invention relates a method of preparing an oil body solution, said method comprising the steps of
a. Preparing a suspension of seed material and cereal bran in an aqueous phase, preferably water, wherein the seed material and cereal bran are present in a dry weight ratio of between 50:50 to 95:5; and wherein the aqueous phase is free from organic solvent, and wherein the cereal bran is selected from the group consisting of oat bran, wheat bran, spelt bran, and mixtures thereof,
b. Mechanically disrupting the suspension to form a slurry;
c. Adjusting the pH of the slurry to greater than 6, preferably to between 6.5 to 10 to form an oil body solution;
d. optionally, filtering or centrifuging the oil body solution to concentrate the oil body solution;
e. heat-treating the oil body solution, and
f. Optionally, drying the oil body solution to form a powder.

### Brief description of the figures

**Figure** 1 shows a confocal Laser Scanning Microscopy image of hemp oil body solution from Example 1. The circle designated as ob highlights an oil body comprising a fat core designated as f and surrounded by proteins designated by p.
Figure 2 shows oxidation induction time at 80°C and 90°C and total fat for oil body solutions prepared with different hemp and cereal bran combinations.

### Detailed description of the invention

Unless noted otherwise, all percentages in the specification refer to weight percent, where applicable.

When a composition is described herein in terms of wt% (weight percent), this means wt% of the total recipe, unless indicated otherwise.

As used in the specification, the words "comprise", "comprising" and the like are to be construed in an inclusive sense, that is to say, in the sense of "including, but not limited to", as opposed to an exclusive or exhaustive sense.

As used herein, "about" is understood to refer to numbers in a range of numerals. In one embodiment, "about" refers to a range of -30% to +30% of the referenced number. In one embodiment, "about" refers to a range of -20% to +20% of the referenced number. In one embodiment, "about" refers to a range of -10% to +10% of the referenced number. In one embodiment, "about" refers to a range of -5% to +5% of the referenced number. In one embodiment, "about" refers to a range of -1% to +1% of the referenced number. All numerical ranges herein should be understood to include all integers, whole or fractions, within the range.

Unless defined otherwise, all technical and scientific terms have and should be given the same meaning as commonly understood by one of ordinary skill in the art to which this invention belongs.

"Mechanical disruption" as described herein can be, for example, grinding, micronisation, hammer milling, or colloidal milling.

"Span" of a volume-based size distribution is defined as Span = (D90 - D10)/D50. The span value gives an indication of how far the 10 percent and 90 percent points are apart, normalized with the midpoint.

The term "vegan" refers to an edible composition which is entirely devoid of animal products, or animal derived products.

The term "vegetarian" refers to an edible composition which is devoid of meat, including fish.

The term "GAE" refers to the Gallic Acid Equivalent. This term is used when the content of a component is quantified against a gallic acid calibration curve. Gallic acid equivalent means that each component quantified was considered equivalent to one molecule of gallic acid. In other words, 1 mg GAE/g of the quantified component is equivalent to 1 mg/g of said quantified component.

The invention relates to a method of preparing an oil body solution. The method of the invention allows the formation of stable plant extracts in liquid and powder formulations.

The method comprises a step a) of preparing a suspension of seed material and cereal bran in an aqueous phase.

The method is substantially natural. It does not involve the use of organic solvent but still allow effective extraction of stabilized oil bodies. In particular, the aqueous phase is free from organic solvent. For avoidance of doubt, water is excluded from definition of organic solvent. For example, the aqueous phase is free from organic solvent selected from the list consisting of acetic acid, acetone, acetonitrile, benzene, 1-butanol, 2-butanol, 3-butanone, t-butyl alcohol, carbon tetrachloride, chlorobenzene, chloroform, cyclohexane, diethylene glycol, diethyl ether, diethylene glycol dimethyl ether, 1,2-dimethoxy-ethane (glyme, DME), dimethyl-formamide (DMF), dimethyl sulfoxide (DMSO), 1,4 dioxane, 1,2-dicholoroethane, ethanol, ethyl acetate, ethylene glycol, glycerin, heptane, hexamethylphosphoramide (HMPA), hexane, methanol, methylene chloride, *N*-methyl-2-pyrrolidinone (NMP), nitromethane, naphthalene, pentane, 1-propanol, 2-propanol, pyridine, toluene, triethyl amine, tetrahydrofuran, o-xylene, m-xylene, p-xylene and combination thereof.

In an embodiment, the process does not involve the use of any organic solvent, including any of the organic solvent listed above.

The aqueous phase may be a buffer or water. The buffer may be any alkaline buffer, for example, a phosphate buffer or Na2CO3 buffer, for example, Na2CO3 buffer of about 0.05M. Preferably, the buffer is about pH 9.5. In a preferred embodiment, the aqueous phase is water.

In an embodiment, the step a) of the method comprises suspending the seed material and the cereal bran separately in an aqueous phase at about pH 6.5 to pH 10, followed by mixing to form a suspension. The aqueous phase may be a buffer as described above or water.

In an embodiment, the suspension in step a) is heat-treated at 85 to 105°C, 90 to 100°C, or 92 to 98°C, or 94 to 96°C, for example at about 95 °C, for example for about 5 to 120 mins, in particular for about 15 minutes.

In some embodiments, the suspension may be cooled to between 4 to 45°C for at least 1 hour, for example before step b).

In a preferred embodiment, the suspension in step a) is heat-treated at 90 to 120°C, followed by cooling to between 4 to 45°C.

In a preferred embodiment, the seed material and the cereal bran may be soaked, preferably for about 1 hour, preferably at room temperature, in particular before step b).

The seed material and cereal bran are present in a dry weight ratio of 50:50 to 95:5, more preferably 80:20 to 90:10 in the suspension. In a preferred embodiment, the ratio of seed material and cereal bran to buffer is about 1:5 to 1:15 (w/v), preferably 1:5 to 1:10 (w/v), for example, 1:6 (w/v) in the suspension.

It has been found that a combination of seed material and cereal bran leads to improved oil body stabilization.

Preferably, the seed material is originated from the plant sources selected from the list consisting of hemp, chia, flax, sunflower, sesame, watermelon, egusi, rapeseed, walnut and combination thereof. More preferably, the seed material is originated from the plant sources selected from the list consisting of hemp, flax, chia and combination thereof. Most preferably, the seed material is originated from hemp.

Flax is an annual plant. Flaxseeds occur in two main varietal colors: brown or yellow. Most of these varieties have similar nutritional characteristics. Flax is rich in omega-3 and other nutrients. It is a source of lignin, protein, and fibers. The flax may have a sugar content of about 1,55 g/100g, a fat content about 37 g/100g, an omega-3 content about 16%, an omega-6 content about 4,3%, and a saturated fat content about 3,2 g/100g.

Chia, *Salvia hispanica* L., is an annual plant grown commercially for its seed, a food rich in omega-3 fatty acids. Chia genotype are numerous but mainly two varieties exist: black chia and white chia. Their composition can differ (32% oil for Tzotzol (black chia), 27% oil for Iztac II (white chia)). The fat content may be 30-34 g/100g. The omega-3 content may be about 17%. The omega-6 content may be about 5%. The saturated fat content may be about 3,3 g/100g.

Hemp is viewed as an eco-friendly and highly sustainable crop. The protein content may be about 30%, the oil content may be about 30%, the fiber (starch) content may be about 25%. The co-processing of seed material with cereal bran contributes to stabilize the oil bodies of the seed material.

The cereal bran is selected from the group consisting of oat bran, wheat bran, spelt bran, and mixtures thereof. It has been observed that the co-processing of seed material with bran from oat, wheat, and spelt effectively stabilizes the oil bodies and significantly increases their stability to oxidation, even at elevated temperature.

Preferably, the cereal bran is selected from the group consisting of wheat bran, oat bran, and mixtures thereof. More preferably, the cereal bran is wheat bran.

In a preferred embodiment, the seed material and the cereal bran are derived from different plant sources.

Certain ranges of protein and carbohydrate contents of the seed material and cereal bran used in the process improve oil body stabilization.

In some embodiments, the seed material has a protein content between 13 and 30%. For example, chia may have a protein content from 15 to 24%, flax may have a protein content from 20 to 30%, hemp may have a protein content from 25 to 30%, and walnut may have a protein content from 13 to 18%.

In some embodiments, the seed material has a carbohydrate content between 8 and 27%. For example, chia may have a carbohydrate content from 25 to 41%, flax may have a carbohydrate content from 25 to 28%, hemp may have a carbohydrate content from 25 to 27%, and walnut may have a protein content from 8 to 13%.

The omega-3 content of the seed material is preferably between 10 and 60% of its oil content.

Typically, the omega-6 content of the seed material is between 15 and 65% of its oil content.

In some embodiments, the total omega-3 and omega-6 content of the seed material is between 10 and 60% of its total oil content.

The process allows to extract the water-extractable components of the cereal bran including for example proteins, carbohydrates, phenolic compounds, vitamins, and minerals. These water-extractable components may contribute the stabilization of oil bodies.

In some embodiments, the cereal bran has a protein content between 8 and 20. For example, oat bran may have a protein content from 8.8 to 16.7%, wheat bran may have a protein content from 9.6 to 17.11%, spelt bran may have a protein content from 9.0 to 17.3%
In some embodiments, the cereal bran has a carbohydrate content between 16 and 80%, preferably 40 and 70%. For example, oat bran may have a carbohydrate content from 55.6 to 61.4%, wheat bran may have a carbohydrate content from 50.7 to 59.2%, spelt bran may have a carbohydrate content from 60.0 to 66.7%.

In some embodiments, the cereal bran has a lipid content between 2 and 25%. For example, oat bran may have a lipid content from 3.0 to 10.6%, wheat bran may have a lipid content from 2.90 to 4.82%, spelt bran may have a lipid content from 4.4 to 6.1%.

Cereal bran contains minerals such as phosphorus, iron, magnesium, potassium, copper, selenium, manganese calcium, choline, and sodium.

Cereal bran contains also vitamins such as B1, B2, B3, B5, B6, E, and K.

In some embodiments, the cereal bran has a total content of tocopherol and tocotrienols of 3.5 to 20mg/100g. In particular, the total content of tocopherol and tocotrienols homologs is of 10.7 - 16.7 mg/100g in wheat bran, 11.7 - 19.7 mg/100g in spelt bran, and 4.3 - 6.7 mg/100g in oat bran.

As mentioned above, it is believed that the process allows the extraction of phenolic compounds of the cereal bran. In particular, it is believed that the process even allows the extraction of soluble and non-soluble phenolic compounds which are originally attached to fibers of the bran such as arabinoxylans.

In some embodiments, the cereal bran may have a total phenolic compounds (TPC) content between 0.1 and 20mg GAE (gallic acid equivalents), preferably 0.3 and 20mg GAE (gallic acid equivalents) per g of cereal bran on a dry weight basis, more preferably 2 and 30mg GAE per g of cereal bran on a dry weight basis. Without wishing to be bound by theory, the phenolic compounds from the cereal bran may contribute to oil body stabilization.

Examples of phenolic compounds in cereal bran include hydroxybenzoic acids such as gallic acid, protocatechuic acid, syringic acid; hydroxycinnamic acids such as ferulic acid, caffeic acid, chlorogenic acid, sinapic acid, *p*-coumaric acid; and flavonoids such as catechin and epicatechin.

The suspension obtained after step a) may have a pH that is greater than 6, preferably between 6.5 to 10. Alternatively, the process may comprise a step of adjusting the pH of the suspension to greater than 6, preferably to between 6.5 to 10 after step a), in particular when the pH of the suspension is below 6, preferably below 6.5 to 10.

In an embodiment, the cereal bran is ground, preferably dry ground, and sieved before step a) to obtain cereal bran having a maximum particle size of less than 600 microns, preferably less than 500 microns. The grinding and the sieving of the cereal bran contributes to improve the extraction of the compounds of the cereal bran that may contribute to oil body stabilization.

The process further comprises a step b) of mechanically disrupting the suspension to form a slurry. Preferably, the suspension is mechanically disrupted by grinding to form a slurry. More preferably, the suspension is mechanically disrupted by wet grinding to form a slurry. The temperature range used in step b) is 4°C to 30°C, preferably about 20°C.

The method comprises a step c) of adjusting the pH of the oil body solution to greater than 6, preferably to between 6.5 to 10. This step is key to keep an oil body solution with liquid flowing consistency so that it can be easily processed in the subsequent steps and can be easily used in different food applications.

The method comprises an optional step d) of filtering or centrifuging the oil body solution to concentrate the oil body solution.

In some embodiments, in step d), (i) the oil body solution is filtered using a filter with pore size of 200µm or less, to provide a first retentate separated from a first filtrate. In other words, the step d) of filtration may comprise the following step: (i) the oil body solution is filtered using a filter with pore size of 200µm or less, to provide a first retentate separated from a first filtrate.

In some embodiments, in step d), (ii) the first retentate is added to buffer at between pH 6.5 to 10 and filtered using a filter with pore size of 200µm or less, to provide a second retentate separated from a second filtrate; and (iii) the first filtrate and second filtrate are combined to concentrate the oil body solution. In other words, the step d) of filtration may further comprise, after step (i), the following steps: (ii) the first retentate is added to buffer at between pH 6.5 to 10 and filtered using a filter with pore size of 200µm or less, to provide a second retentate separated from a second filtrate; and (iii) the first filtrate and second filtrate are combined to concentrate the oil body solution.

In a preferred embodiment, the step d) of filtering or centrifuging the oil body solution is not optional.

The obtained oil body solution comprises oil body. The integrity of the oil body is preserved over the method, including after the mechanical disruption step and the filtration/centrifugation step. In particular, the average D [3;2] particle size of the oil bodies in solution in step c) after mechanical disruption and after pH adjustment is between 0.5 µm to 20 µm, preferably 4 to 20 µm, wherein said average D [3;2] particle size is measured using static light scattering. Likewise, the average D [3;2] particle size of the oil bodies in solution in step d) after filtering or centrifuging is between 0.5 µm to 20 µm, preferably 4 to 20 µm, wherein said average D [3;2] particle size is measured using static light scattering.

Preferably, static light scattering is measured using a Mastersizer 3000. The size of all particles in the solution is measured.

The %TS (total solid) content of the oil body solutions were measured. In an embodiment, the % total solid content of the oil body solution, preferably oil body solution obtained after step d) and/or step e), is less than 25%, preferably between 1 to 25%, preferably between 1 to 15%, more preferably 8 to 12, preferably 8%.

The method comprises a step e) of heat-treating the oil body solution. The oil body solution may be heat treated, for example at 85 to 150 °C, for example at about 95°C. For example, the heat treatment may be performed for 2 seconds to 15 minutes.

The heat treatment may be carried out in an indirect manner by means of a heat-plate exchanger. As a variant, it is possible to carry it out in a jacketed holding unit or direct steam injection.

The heat treatment appears to reinforce the oil body-protein-polysaccharide complexes and improve the stability of oil bodies.

The obtained oil body solution may be stored. For storage, the temperature range used is 4°C to 12°C.

In an embodiment, the oil body solution may be fermented by adding at least one bacterial culture into the oil body solution to form a fermented oil body solution. The bacterial culture may comprise one or several lactic acid-producing bacteria. The fermentable mixture is maintained, for example at 45°C, for example between 4 to 6 hours. The bacterial culture may also comprise yeast.

The method comprises an optional step f) of drying the oil body solution to form a powder. The step f) of drying may be performed by any drying method which is known to the person skilled in the art. For example, it may be performed by spray drying or by freeze drying. Preferably, the step f) of drying is performed by freeze drying.

The method of the invention uses a combination of blending, mechanical disruption, filtration/centrifugation and heat treatment steps and does not involve the use of organic solvent. The advantage over prior art methods is that the integrity of the oil bodies is maintained while keeping pleasant sensory.

Disclosed, but not claimed as such, is an oil body solution made from seed material selected from the plant sources as described in the present invention, and from cereal bran as described in the present invention.

In particular, the oil body solution comprises seed material, in particular seed material as described in the present invention. It also comprises cereal bran, in particular cereal bran as described in the present invention. The seed material is ground. The cereal bran is ground.The oil body composition comprises proteins and/or carbohydrates coming from cereal, preferably cereal bran. In particular, the carbohydrates comprise or consist of fibers coming from cereal, preferably cereal bran. In some embodiment, the carbohydrates and/or proteins coming from cereal, preferably coming from cereal bran are bound and/or adsorbed to the surface of the oil bodies of the oil body solution. The cereal is selected from the group consisting of millet, rice, rye, barley, oat, wheat, spelt, and mixtures thereof. In a preferred embodiment, the bran is different from cereal selected from millet, rice, rye, barley and mixture thereof. In particular, the cereal is selected from the group consisting of oat, wheat, spelt, and mixtures thereof. Preferably, the cereal is selected from the group consisting of wheat, oat, and mixtures thereof. More preferably, the cereal is wheat. The cereal bran is a cereal bran as described in the present invention. The process involving co-processing of oil seeds together with cereal bran results in oil body composition that comprises proteins and/or carbohydrates coming from cereal, in particular cereal bran. These proteins and/or carbohydrates, such as fibers, may contribute to oil bodies stability. In particular, the process of the invention may favor the interactions between carbohydrates, such as fibers and/or proteins of the cereal bran and oil bodies and so may favor oil bodies stability.

In some embodiment, the oil bodies of the oil body solution come from the seed material, preferably seed material as disclosed in the present invention.The oil body solution has an average D [3;2] particle size of between 0.5 µm to 20 µm, preferably between 4 µm to 20 µm measured using static light scattering.

In one embodiment, the D90 of the oil body solution is between 50 to 500 µm. In one embodiment, the D50 of the oil body solution is between 5 to 250 µm. In one embodiment, the D10 of the oil body solution is between 0.5 to 55 µm. In one embodiment, the span is between 1 to 10. Span is defined as described herein.

The D90, D50, and D10 average particle sizes may be also measured using static light scattering.

Preferably, static light scattering is measured using a Mastersizer 3000. The size of all particles in the solution is measured.

In a preferred embodiment, the solution has a pH between 6.5 to 10, for example 9.5.

The oil body solution has an average D [3;2] particle size between 0.5 µm to 20 µm, preferably between 4 µm to 20 µm measured using static light scattering.

In one embodiment, the D90 of the oil body solution or powder thereof is between 50 to 500 µm. In one embodiment, the D50 of the oil body solution or powder thereof is between 5 to 250 µm. In one embodiment, the D10 of the oil body solution or powder thereof is between 0.5 to 55 µm. In one embodiment, the span is between 1 to 10. Span is defined as described herein.

The D90, D50, and D10 average particle sizes may also be measured using static light scattering.

Preferably, static light scattering is measured using a Mastersizer 3000. The size of all particles in the solution is measured.

The solution further has a pH between 6.5 to 10.

The ratio of cereal bran to fat in the oil body solution is 1g cereal bran to 20-40 ml oil body solution or 1 g cereal bran per 2 to 5 g of seed material in the oil body solution.

In an embodiment, the oil body solution has a fat content of at least 0.5g, preferably 0.5 to 8g, more preferably 2 to 8g per 100mL of oil body solution.

The oil body solution has an omega 3 content of at least 150 mg, preferably at least 300mg, more preferably at least 600mg per 100mL of oil body solution. The oil body solution has an omega 3 content of at most 5000mg, more preferably at most 2000mg, most preferably at most 1000 mg per 100 mL of oil body solution. In an embodiment, the oil body solution has an omega 3 content of 200mg to 500mg per 100 mL of oil body solution.

In some other embodiment, the oil body solution has an omega 6 content of at least 80mg, preferably at least 150 mg, more preferably at least 300mg, most preferably at least 600mg per 100mL of oil body solution. The oil body solution an omega 6 content of at most 5000mg, more preferably at most 2000mg per 100 mL of oil body solution. In an embodiment, the oil body solution has an omega 6 content of 2000mg to 5000mg per 100 mL of oil body solution. The oil body solution is made from seed material selected from the plant sources as described in the present invention, and from cereal bran as described in the present invention.

In particular, the oil body solution comprises seed material, in particular seed material as described in the present invention. It also comprises cereal bran, in particular cereal bran as described in the present invention. The seed material is ground. The cereal bran is ground.

The oil body composition comprises proteins and/or carbohydrates coming from cereal, preferably cereal bran. In particular, the carbohydrates comprise or consist of fibers coming from cereal, preferably cereal bran. In some embodiment, the carbohydrates and/or proteins coming from cereal, preferably coming from cereal bran are bound and/or adsorbed to the surface of the oil bodies of the oil body solution. The cereal is selected from the group consisting of millet, rice, rye, barley, oat, wheat, spelt, and mixtures thereof. In a preferred embodiment, the bran is different from cereal selected from millet, rice, rye, barley and mixture thereof. In particular, the cereal is selected from the group consisting of oat, wheat, spelt, and mixtures thereof. Preferably, the cereal is selected from the group consisting of wheat, oat, and mixtures thereof. More preferably, the cereal is wheat. The cereal bran is a cereal bran as described in the present invention. The process involving co-processing of oil seeds together with cereal bran results in oil body composition that comprises proteins and/or carbohydrates coming from cereal, in particular cereal bran. These proteins and/or carbohydrates, such as fibers, may contribute to oil bodies stability. In particular, the process of the invention may favor the interactions between carbohydrates, such as fibers and/or proteins of the cereal bran and oil bodies and so may favor oil bodies stability.

In some embodiment, the oil bodies of the oil body solution come from the seed material, preferably seed material as disclosed in the present invention.

Preferably, the food product is plant-based milk alternative, ice cream, confectionery, alternative chilled dairy, nutritional supplement, nutritional meal, baby food, sauce, dressing, soup or dip. More preferably, the food product is plant-based milk alternative, plant-based chilled dairy alternative, nutritional supplement, baby food, sauce, soups, dressing and dip. Most preferably, the food product is plant milk alternative, plant-based chilled dairy alternative, sauces, soups or dips. Examples of plant-based chilled dairy alternative include yogurt alternative, dessert cream alternative, custard alternative, pudding alternative, fresh cheese alternative, kefir alternative, fermented milk alternative, milkshake alternative. The alternative chilled dairy is preferably yogurt alternative.

The food product may be in a solid form, a liquid form or a powder form.

In a preferred embodiment, the food product is a vegetarian or vegan food product.

**Table 1**

| | | |
|---|---|---|
| **Phase separation** | No phase separation, incl. no creaming | Phase separation, including creaming |
| **Smell** | No fishy smell | Fishy smell |

The oil body solution of example 1 was observed by Confocal Laser Scanning Microscopy. The method used for preparing confocal microscopy pictures was the following.

The oil body solution was placed on a glass slide pre-stained with a solution of two dyes in polyvinyl pyrrolidone (PVP, 5% in ethanol).

In particular, the two dyes used were:
- Fast Green FCF (*Sigma-Aldrich, Saint Louis, Missouri, United States*)*:* 0.1% in PVP K15 (Polyvinylpyrrolidone molecular weight 15000) 5% in ethanol.
- Nile Red (*Sigma-Aldrich, Saint Louis, Missouri, United States*): 0.1% in PVP K15 (Polyvinylpyrrolidone molecular weight 15000) 5% in ethanol.

Imaging was done with a LSM 710 confocal microscope upgraded with an Airyscan detector (Zeiss, Oberkochen, Germany). Acquisition and image treatments were done using the Zen 2.1 software.

The acquisition parameters for this protocol were as follows:
- Nile Red: Excitation 488 nm; Emission: BP: 490-631 nm to highlight fat,
- Fast Green: Excitation 633 nm; Emission: LP: 639 nm to highlight proteins.

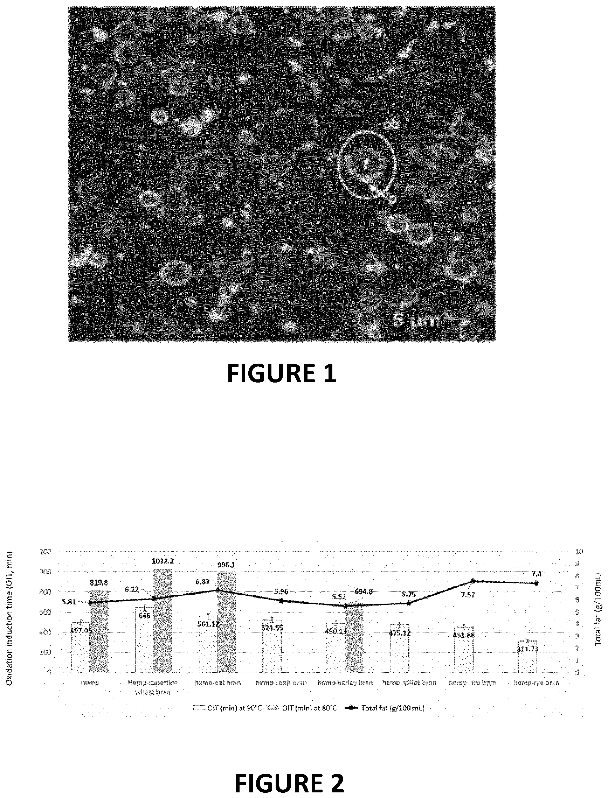

The microscopy imaging is provided in figure 1. It can be seen that the solution comprises oil bodies. The results of table 1 tend to suggest a significant part of oil bodies of the solution are not stable.

### Example 2: Production of oil body solution from hemp seeds and oat bran

The Oat bran was ground (Retch GM200, Germany) and sieved at 500 microns (Retch GM200 Jet, Germany). 80g of dehulled hemp seeds and 20g of ground oat bran were suspended in water (ratio1:6, w/v) and heat treated at 95°C for 15min in a water bath. The resulting slurry was ground for 30s at room temperature using a Waring blender at speed 1 (1800 rpm)

(Waring Blendor, USA). The pH was adjusted to 7.5 (using HCl or NaOH). The mixture was mixed at room temperature for 1 hour with a Heidolph overhead mixer (RZR 2021, Germany) then filtered using a 200µm-pore size cheesecloth. The final oil body solution was heat-treated at 95°C for 10min in a water bath before to be let stand at room temperature. Finally, the oil body solution was stored at room temperature or at 40°C or freeze-dried to form a powder.

The oxidative stability of the solution was assessed via sniffing after storage for 0 or 4 weeks at 40°C. The physical stability of the solution was also assessed via visual inspection of the solution after storage for 0 or 4 weeks at 40°C.

The results are provided in table 2.

**Table 2**

| | **T0 (0 day)** | **T1 (4 weeks)** |
|---|---|---|
| **Phase separation** | No phase separation, incl. no creaming | No phase separation, incl. no creaming |
| **Smell** | No fishy smell | No fishy smell |

### Example 3: Production of oil body solution from hemp seeds and wheat bran

The wheat bran was ground (Retch GM200, Germany) and sieved at 500 microns (Retch GM200 Jet, Germany). 80g of dehulled hemp seeds and 20g of ground wheat bran were suspended in water (ratio1:6, w/v) and heat treated at 95°C for 15min in a water bath. The resulting slurry was ground for 30s at room temperature using a Waring blender at speed 1 (1800 rpm) (Waring Blendor, USA). The pH eas adjusted to 7.5 (using HCl or NaOH). The mixture was mixed at room temperature for 1 hour with a Heidolph overhead mixer (RZR 2021, Germany) then filtered using a 200µm-pore size cheesecloth. The final oil body solution was heat-treated at 95°C for 10min in a water bath before to be let stand at room temperature. Finally, the oil body solution was stored at room temperature or at 40°C or freeze-dried to form a powder.

The oxidative stability of the solution was assessed via sniffing after storage for 0 or 4 weeks at 40°C. The physical stability of the solution was also assessed via visual inspection of the solution after storage for 0 or 4 weeks at 40°C.

The results are provided in table 3.

**Table 3**

| | **T0 (0 day)** | **T1 (4 weeks)** |
|---|---|---|
| **Phase separation** | No phase separation, incl. no creaming | No phase separation, incl. no creaming |
| **Smell** | No fishy smell | No fishy smell |

### Example 4: Production of oil body solution from hemp seeds and spelt bran

Spelt bran was ground (Retch GM200, Germany) and sieved at 500 microns (Retch GM200 Jet, Germany). 80g of dehulled hemp seeds and 20g of ground spelt bran were suspended in water (ratio1:6, w/v) and heat treated at 95°C for 15min in a water bath. The resulting slurry was ground for 30s at room temperature using a Waring blender at speed 1 (1800 rpm) (Waring Blendor, USA). The pH was adjusted to 7.5 (using HCl or NaOH). The mixture was mixed at room temperature for 1 hour with a Heidolph overhead mixer (RZR 2021, Germany) then filtered using a 200µm-pore size cheesecloth. The final oil body solution was heat-treated at 95°C for 10min in a water bath before to be let stand at room temperature. Finally, the oil body solution was stored at room temperature or at 40°C or freeze-dried to form a powder.

The oxidative stability of the solution was assessed via sniffing after storage for 0 or 4 weeks at 40°C. The physical stability of the solution was also assessed via visual inspection the solution after storage for 0 or 4 weeks at 40°C.

The results are provided in table 4.

**Table 4**

| | **T0 (0 day)** | **T1 (4 weeks)** |
|---|---|---|
| **Phase separation** | No phase separation, incl. no creaming | No phase separation, incl. no creaming |
| **Smell** | No fishy smell | No fishy smell |

### Comparative example

### 5: Production of oil body solution from hemp seeds and barley bran

Barley bran was ground (Retch GM200, Germany) and sieved at 500 microns (Retch GM200 Jet, Germany). 80g of dehulled hemp seeds and 20g of ground barley bran were suspended in water (ratio1:6, w/v) and heat treated at 95°C for 15min in a water bath. The resulting slurry was ground for 30s at room temperature using a Waring blender at speed 1 (1800 rpm) (Waring Blendor, USA). The pH was adjusted to 7.5 (using HCl or NaOH). The mixture was mixed at room temperature for 1 hour with a Heidolph overhead mixer (RZR 2021, Germany) then filtered using a 200µm-pore size cheesecloth. The final oil body solution was heat-treated at 95°C for 10min in a water bath before to be let stand at room temperature. Finally, the oil body solution was stored at room temperature or at 40°C or freeze-dried to form a powder.

The oxidative stability of the solution was assessed via sniffing after storage for 0 or 4 weeks at 40°C. The physical stability of the solution was also assessed via visual inspection of the solution after storage for 0 or 4 weeks at 40°C.

The results are provided in table 5.

**Table 5**

| | **T0 (0 day)** | **T1 (4 weeks)** |
|---|---|---|
| **Phase separation** | No phase separation, incl. no creaming | No phase separation, incl. no creaming |
| **Smell** | No fishy smell | No fishy smell |

### Comparative example

### 6: Production of oil body solution from hemp seeds and millet bran

Millet bran was ground (Retch GM200, Germany) and sieved at 500 microns (Retch GM200 Jet, Germany). 80g of dehulled hemp seeds and 20g of ground millet bran were suspended in water (ratio1:6, w/v) and heat treated at 95°C for 15min in a water bath. The resulting slurry was ground for 30s at room temperature using a Waring blender at speed 1 (1800 rpm) (Waring Blendor, USA). The pH was adjusted to 7.5 (using HCl or NaOH). The mixture was mixed at room temperature for 1 hour with a Heidolph overhead mixer (RZR 2021, Germany) then filtered using a 200µm-pore size cheesecloth. The final oil body solution was heat-treated at 95°C for 10min in a water bath before to be let stand at room temperature. Finally, the oil body solution was stored at room temperature or at 40°C or freeze-dried to form a powder.

The oxidative stability of the solution was assessed via sniffing after storage for 0 or 4 weeks at 40°C. The physical stability of the solution was also assessed via visual inspection of the solution after storage for 0 or 4 weeks at 40°C.

The results are provided in table 6.

**Table 6**

| | **T0 (0 day)** | **T1 (4 weeks)** |
|---|---|---|
| **Phase separation** | No phase separation, incl. no creaming | No phase separation, incl. no creaming |
| **Smell** | No fishy smell | No fishy smell |

### Comparative example

### 7: Production of oil body solution from hemp seeds and rice bran

The rice bran was ground (Retch GM200, Germany) and sieved at 500 microns (Retch GM200 Jet, Germany). 80g of dehulled hemp seeds and 20g of ground rice bran were suspended in water (ratio1:6, w/v) and heat treated at 95°C for 15min in a water bath. The resulting slurry was ground for 30s at room temperature using a Waring blender at speed 1 (1800 rpm) (Waring Blendor, USA). The pH was adjusted to 7.5 (using HCl or NaOH). The mixture was mixed at room temperature for 1 hour with a Heidolph overhead mixer (RZR 2021, Germany) then filtered using a 200µm-pore size cheesecloth. The final oil body solution was heat-treated at 95°C for 10min in a water bath before to be let stand at room temperature. Finally, the oil body solution was stored at room temperature or at 40°C or freeze-dried to form a powder.

The oxidative stability of the solution was assessed via sniffing after storage for 0 or 4 weeks at 40°C. The physical stability of the solution was also assessed via visual inspection of the solution after storage for 0 or 4 weeks at 40°C.

The results are provided in table 7.

**Table 7**

| | **T0 (0 day)** | **T1 (4 weeks)** |
|---|---|---|
| **Phase separation** | No phase separation, incl. no creaming | No phase separation, incl. no creaming |
| **Smell** | No fishy smell | No fishy smell |

### Comparative example

### 8: Production of oil body solution from hemp seeds and rye bran

Rye bran was ground (Retch GM200, Germany) and sieved at 500 microns (Retch GM200 Jet, Germany). 80g of dehulled hemp seeds and 20g of ground rye bran were suspended in water (ratio1:6, w/v) and heat treated at 95°C for 15min in a water bath. The resulting slurry was ground for 30s at room temperature using a Waring blender at speed 1 (1800 rpm) (Waring Blendor, USA). The pH was adjusted to 7.5 (using HCl or NaOH). The mixture was mixed at room temperature for 1 hour with a Heidolph overhead mixer (RZR 2021, Germany) then filtered using a 200µm-pore size cheesecloth. The final oil body solution was heat-treated at 95°C for 10min in a water bath before to be let stand at room temperature. Finally, the oil body solution was stored at room temperature or at 40°C or freeze-dried to form a powder. The oxidative stability of the solution was assessed via sniffing after storage for 0 or 4 weeks at 40°C. The physical stability of the solution was also assessed via visual inspection of the solution after storage for 0 or 4 weeks at 40°C.

The results are provided in table 8.

**Table 8**

| | **T0 (0 day)** | **T1 (4 weeks)** |
|---|---|---|
| **Phase separation** | No phase separation, incl. no creaming | No phase separation, incl. no creaming |
| **Smell** | No fishy smell | No fishy smell |

### Example 9: Assessment of oxidative stability of oil body solutions obtained from hemp alone or different hemp and cereal bran combinations by Rapidoxy 100

RapidOxy 100 (Anton Paar Switzerland AG, Buchs, Switzerland) was used to evaluate the oxidative stability of hemp oil body solution of example 1 (hereinafter, hemp extract) or hemp-bran oil body solution of examples 2 to 8 (hereinafter, hemp-cereal bran coextracts) under accelerated conditions, meaning elevated temperature and exposure to an excess of pure oxygen. Samples containing 5 g hemp alone or hemp-bran hemp oil body solution of example 1 or hemp-bran oil body solution of examples 2 to 8 were prepared in glass dishes. The glass dishes containing samples were then put in a stainless-steel test chamber. In the test chamber, the initial oxygen pressure was set at 7 bar, and the temperature was raised and kept constant at 80 or 90°C during the oxidation. During the reaction, the pressure of the test chamber is continuously monitored, and a pressure drop indicates the oxygen consumption caused by the oxidation reaction. The "oxidation induction time (OIT)" is defined as the time of the intersection of two tangents of the pressure curves, i.e. intersection between the tangent to the pressure curve when the pressure is steady and the tangent to the pressure curve when the pressure is dropping. This time is an indication of the oxidative stability of the sample. The longer the OIT is, the stronger (i.e. the higher) the oxidative stability is, and vice versa

The results are shown in figure 2.

Figure 1 shows the oxidative stability results of hemp alone or hemp-cereal bran coextracts oxidized at 80°C and/or 90°C by Rapidoxy 100.

It can be observed that the oxidative stability of hemp oil body solution was enhanced through coextraction with wheat, oat, and spelt bran, but, it was decreased through coextraction with rice, barley, rye or millet bran.

Among different bran tested, wheat bran showed the best oxidative stabilization effect, followed by oat bran and spelt bran.

### Example 10: Hydrophilic oxygen radical absorbance capacity (H-ORAC) value of cereal brans

H-ORAC assay measures the antioxidant capacity, in particular the radical chain-breaking ability of a sample by monitoring the inhibition of peroxyl radical-induced oxidation through the hydrogen atom transfer (HAT) mechanism.

In H-ORAC assay, artificially generated peroxyl radicals react with a fluorescent probe to form a non-fluorescent product. When adding a sample with molecules having antioxidant properties, in particular, the radical chain-breaking ability, a competitive reaction between the fluorescent probe and the antioxidant molecules of the sample to react with peroxyl radicals takes place. Calculation of the antioxidant capacity, in particular, hydrophilic oxygen radical absorbance capacity is measured using the net integrated areas under the fluorescence curves (AUC), i.e. area under the sample fluorescence curve minus the area under the blank fluorescent curve.

In the present example, the different cereal bran ingredients used in example 2-8 were separately ground (Retch GM200, Germany) and sieved at 500 microns (Retch GM200 Jet, Germany) to obtain ground cereal brans. The different obtained ground cereal brans were assessed via H-ORAC assay. The H-ORAC assay was performed according to the ORAC-FL method disclosed in Dàvalos et al., "Extending Applicability of the Oxygen Radical Absorbance Capacity (ORAC-Fluorescein) Assay." J. Agric. Food Chem. 52: 48-54 (2004).

The fluorescence of the different samples was measured by fluorometry using Varioskan LUX-Fluorescence detector (Thermo Fisher Scientific) with Excitation wavelength = 485 nm and Emission wavelength = 525 nm.

The results are provided in table 9.

**Table 9**

| | H-ORAC value |
|---|---|
| Cereal Bran | (µmol Troxol Equivalent/g bran) |
| Wheat Bran | 23.38 |
| Oat bran | 182.21 |
| Spelt bran | 48.07 |
| Rice bran | 50.46 |
| Millet bran | 16.02 |
| Rye bran | 13.99 |
| Barley bran | 10.3 |

The results (Table 9) showed that oat bran has the highest H-ORAC value among the bran studied, and it is followed in order by rice bran, spelt bran, wheat bran, and the remaining bran. The order of ORAC values does not align with the antioxidant capacity of the hemp-bran co-extract measured by the RapidOxy in example 9.

This suggests that other mechanisms than the radical chain-breaking mechanism might be involved in the stabilization of oil bodies in the oil body solution obtained from coextraction of seed material with bran. Moreover, the coextraction process of the invention might be key to favor these other mechanisms involved in the stabilization of oil bodies.

## Claims

1. A method of preparing an oil body solution, said method comprising the steps of
a. preparing a suspension of seed material and cereal bran in an aqueous phase, preferably water, wherein the seed material and cereal bran are present in a dry weight ratio of between 50:50 to 95:5; and wherein the aqueous phase is free from organic solvent and wherein the cereal bran is selected from the group consisting of oat bran, wheat bran, spelt bran, and mixtures thereof,
b. mechanically disrupting the suspension to form a slurry;
c. adjusting the pH of the slurry to greater than 6, preferably to between 6.5 to 10 to form an oil body solution;
d. optionally, filtering or centrifuging the oil body solution to concentrate the oil body solution;
e. heat-treating the oil body solution, and
f. optionally, drying the oil body solution to form a powder.

2. The method according to claim 1, wherein the seed material has a protein content between 13 and 30% and a carbohydrate content between 8 and 27%, and the cereal bran has a protein content between 8 and 20%, a carbohydrate content between 16 and 80%.

3. The method according to any preceding claims, wherein the omega-3 content of the seed material is between 10 and 60% of its oil content.

4. The method according to any preceding claims, wherein the seed material is originated from the plant sources selected from the list consisting of hemp, chia, flax, sunflower, sesame, watermelon, egusi, rapeseed, walnut and combination thereof.

5. The method according to any preceding claim, wherein the suspension is mechanically disrupted by grinding to form a slurry.

6. The method of any preceding claim, wherein in step d), (i) the oil body solution is filtered using a filter with pore size of 200µm or less, to provide a first retentate separated from a first filtrate.

7. The method of claim 6, wherein in step d), (ii) the first retentate is added to buffer at between pH 6.5 to 10 and filtered using a filter with pore size of 200µm or less, to provide a second retentate separated from a second filtrate; and (iii) the first filtrate and second filtrate are combined to concentrate the oil body solution.

8. The method according to any preceding claims, wherein the average D [3;2] particle size of the oil bodies in solution in step c) after mechanical disruption and after pH adjustment is between 0.5 µm to 20 µm, measured using static light scattering.

9. The method according to any preceding claims, wherein the % total solid content of the oil body solution, preferably the oil body solution obtained after step d) and/or step e), is between 1 to 15%.

## Patentansprüche

1. Verfahren zum Herstellen einer Ölkörperlösung, das Verfahren umfassend die Schritte
a. Herstellen einer Suspension von Samenmaterial und Getreidekleie in einer wässrigen Phase, vorzugsweise Wasser, wobei das Samenmaterial und die Getreidekleie in einem Trockengewichtsverhältnis von zwischen 50 : 50 bis 95 : 5 vorliegen; und wobei die wässrige Phase frei von organischem Lösungsmittel ist und wobei die Getreidekleie ausgewählt ist aus der Gruppe, bestehend aus Haferkleie, Weizenkleie, Dinkelkleie und Mischungen davon,
b. mechanisches Zerbrechen der Suspension, um eine Aufschlämmung auszubilden;
c. Anpassen des pH-Werts der Aufschlämmung auf mehr als 6, vorzugsweise auf zwischen 6,5 und 10, um eine Ölkörperlösung auszubilden;
d. optionales Filtrieren oder Zentrifugieren der Ölkörperlösung, um die Ölkörperlösung zu konzentrieren;
e. Wärmebehandeln der Ölkörperlösung und
f. optionales Trocknen der Ölkörperlösung, um ein Pulver auszubilden.

2. Verfahren nach Anspruch 1, wobei das Samenmaterial einen Proteingehalt zwischen 13 und 30 % und einen Kohlenhydratgehalt zwischen 8 und 27 % aufweist und die Getreidekleie einen Proteingehalt zwischen 8 und 20 %, einen Kohlenhydratgehalt zwischen 16 und 80 % aufweist.

3. Verfahren nach einem der vorstehenden Ansprüche, wobei der Omega-3-Gehalt des Samenmaterials zwischen 10 und 60 % seines Ölgehalts liegt.

4. Verfahren nach einem der vorstehenden Ansprüche, wobei das Samenmaterial aus den Pflanzenquellen stammt, die aus der Liste ausgewählt sind, bestehend aus Hanf, Chia, Flachs, Sonnenblume, Sesam, Wassermelone, Egusi, Raps, Walnuss und einer Kombination davon.

5. Verfahren nach einem der vorstehenden Ansprüche, wobei die Suspension durch ein Mahlen mechanisch zerbrochen wird, um eine Aufschlämmung auszubilden.

6. Verfahren nach einem der vorstehenden Ansprüche, wobei in Schritt d) (i) die Ölkörperlösung unter Verwendung eines Filters mit einer Porengröße von 200 µm oder weniger filtriert wird, um ein erstes Retentat bereitzustellen, das von einem ersten Filtrat getrennt ist.

7. Verfahren nach Anspruch 6, wobei in Schritt d), (ii) das erste Retentat zu einem Puffer bei zwischen pH 6,5 bis 10 zugegeben und unter Verwendung eines Filters mit der Porengröße von 200 µm oder weniger filtriert wird, um ein zweites Retentat bereitzustellen, das von einem zweiten Filtrat getrennt ist; und (iii) das erste Filtrat und das zweite Filtrat kombiniert werden, um die Ölkörperlösung zu konzentrieren.

8. Verfahren nach einem der vorstehenden Ansprüche, wobei die durchschnittliche D [3;2] Teilchengröße der Ölkörper in der Lösung in Schritt c) nach einem mechanischen Zerbrechen und nach einer pH-Anpassung zwischen 0,5 µm und 20 µm liegt, unter Verwendung eines statischen Lichtstreuens gemessen.

9. Verfahren nach einem der vorstehenden Ansprüche, wobei der % eines Gesamtfeststoffgehalts der Ölkörperlösung, vorzugsweise der Ölkörperlösung, die nach Schritt d) und/oder Schritt e) erhalten wird, zwischen 1 und 15 % liegt.

## Revendications

1. Procédé de préparation d'une solution de corps huileux, ledit procédé comprenant les étapes consistant à
a. préparer une suspension de matériau de graine et de son de céréale dans une phase aqueuse, de préférence de l'eau, dans lequel le matériau de graine et le son de céréale sont présents dans un rapport de poids sec compris de 50:50 à 95:5 ; et dans lequel la phase aqueuse est exempte de solvant organique et dans lequel le son de céréale est choisi dans le groupe constitué de son d'avoine, son de blé, son d'épeautre, et mélanges de ceux-ci,
b. désintégrer mécaniquement la suspension pour former une bouillie ;
c. ajuster le pH de la bouillie à plus de 6, de préférence à un pH compris de 6,5 à 10 pour former une solution de corps huileux ;
d. facultativement, filtrer ou centrifuger la solution de corps huileux pour concentrer la solution de corps huileux ;
e. traiter à la chaleur la solution de corps huileux, et
f. facultativement, sécher la solution de corps huileux pour former une poudre.

2. Procédé selon la revendication 1, dans lequel le matériau de graine a une teneur en protéines entre 13 et 30 % et une teneur en glucides entre 8 et 27 %, et le son de céréale a une teneur en protéines entre 8 et 20 %, une teneur en glucides entre 16 et 80 %.

3. Procédé selon de quelconques revendications précédentes, dans lequel la teneur en oméga-3 du matériau de graine est comprise entre 10 et 60 % de sa teneur en huile.

4. Procédé selon de quelconques revendications précédentes, dans lequel le matériau de graine a pour origine les sources végétales choisies dans la liste constituée par chanvre, chia, lin, tournesol, sésame, pastèque, égousi, colza, noix et combinaison de ceux-ci.

5. Procédé selon l'une quelconque revendication précédente, dans lequel la suspension est mécaniquement désintégrée par broyage pour former une bouillie.

6. Procédé selon l'une quelconque revendication précédente, dans lequel à l'étape d), (i) la solution de corps huileux est filtrée à l'aide d'un filtre avec une taille de pore de 200 µm ou moins, pour fournir un premier rétentat séparé d'un premier filtrat.

7. Procédé selon la revendication 6, dans lequel à l'étape d), (ii) le premier rétentat est ajouté à un tampon à un pH compris de 6,5 à 10 et filtré à l'aide d'un filtre avec une taille de pore de 200 µm ou moins, pour fournir un second rétentat séparé d'un second filtrat ; et (iii) le premier filtrat et le second filtrat sont combinés pour concentrer la solution de corps huileux.

8. Procédé selon de quelconques revendications précédentes, dans lequel la taille de particules D[3 ;2] moyenne des corps huileux en solution à l'étape c) après désintégration mécanique et après ajustement de pH est comprise de 0,5 µm à 20 µm, mesurée à l'aide d'une diffusion statique de lumière.

9. Procédé selon de quelconques revendications précédentes, dans lequel le % de teneur totale en solides de la solution de corps huileux, de préférence la solution de corps huileux obtenue après l'étape d) et/ou l'étape e), est compris de 1 à 15 %.
